(19) Europäisches Patentamt
European Patent Office
Office européen des brevets

(11) Publication number : **0 049 050**
**B1**

# (12) EUROPEAN PATENT SPECIFICATION

(45) Date of publication of patent specification :
21.03.84

(21) Application number : **81303933.6**

(22) Date of filing : **27.08.81**

(51) Int. Cl.³ : **E 05 B 15/16, E 05 B 17/00**

---

(54) **Cylinder lock.**

---

(30) Priority : **26.09.80 JP 134806/80**

(43) Date of publication of application :
**07.04.82 Bulletin 82/14**

(45) Publication of the grant of the patent :
**21.03.84 Bulletin 84/12**

(84) Designated contracting states :
**DE FR GB**

(56) References cited :
**US-A- 1 705 344**

(73) Proprietor : **NISSAN MOTOR COMPANY, LIMITED**
**No. 2, Takara-cho, Kanagawa-ku**
**Yokohama-shi Kanagawa-ken 221 (JP)**

(72) Inventor : **Mochida, Haruo**
**No. 2-23 Serigaya**
**Konan-ku Yokohama City (JP)**

(74) Representative : **Evans, David Charles et al**
**F.J. CLEVELAND & COMPANY 40-43, Chancery Lane**
**London, WC2A 1JQ (GB)**

EP 0 049 050 B1

## Cylinder lock

The present invention relates to a cylinder lock arranged to improve safety against theft.

It is easy to manufacture many cylinder locks of different kinds by changing the lengths of tumbler pins and their combination, and, therefore, it is difficult to prepare a duplicate key for a cylinder lock. Because of this and their reliability with an elaborate construction, cylinder locks are widely used. Thus cylinder locks are elaborate, but, on the other hand, they tend to be mechanically weak and are, therefore, liable to be broken without a duplicate key.

A cylinder lock provided with an anti-theft arrangement is known from US-A-1 705 344 and comprises :

a casing having a bore, a cylinder rotatably received in said bore of said casing and having a keyhole, a tumbler mechanism connected with both said casing and said cylinder for allowing said cylinder to rotate only when a corresponding correct key is inserted into said keyhole, actuating means actuated by the rotational movement of said cylinder for actuating the locking action, wherein said cylinder is provided, at the entrance of said keyhole, with a portion which is deformable in response to a force exceeding a predetermined level and exerted by an object other than a correct key inserted into said keyhole, said casing having a stop portion which comes into contact with said deformable portion when deformed into the radially expanded form.

The cylinder lock of this prior U.S.A. patent has, however, a disadvantage in that the anti-theft arrangement cannot prevent axial extraction of the inner cylinder from the casing and an object, therefore, of the present invention is to provide an improved cylinder lock in which this particular disadvantage is overcome.

According to the invention, a cylinder lock as set out above is characterised in that the stop portion is formed with a projecting portion of said casing, which extends outwardly therefrom and has a bore in which said deformable portion is located, said projecting portion of said casing having a flange extending inwardly therefrom to provide a limited opening having a size which permits the passage therethrough of said deformable portion of said cylinder when said deformable portion is in its normal undeformed condition, said deformable portion having a hole therein for the insertion therethrough of the correct key into said keyhole, said deformable portion having in its deformed condition a circumferential contour which, in its entire circumference, is expanded radially beyond the limited opening of said flange and is located behind the flange within the bore of said projecting portion so as to prevent extraction of said cylinder axially from said casing.

Preferably, the deformable portion has a plurality of slits disposed radially around the insertion hole and cut axially from an outer end of said deformable portion to some depth so that the deformable portion is divided into several sections radially disposed around the insertion hole and each extending axially. Preferably, also, the deformable portion is formed with a circumferential groove formed on the circumference of said deformable portion and surrounding the insertion hole, and the slits extend axially to the groove.

Figure 1 is a front view showing an automobile steering lock combined with an ignition switch to which the present invention is applied,

Figure 2 is a right side view of the steering lock of Fig. 1 ;

Figure 3 is a sectional view across A-A of Fig. 1 showing a conventional cylinder lock,

Figure 4 is a sectional view similar to Fig. 3 showing an embodiment of the present invention,

Figure 5 is an enlarged perspective view showing a portion of Fig. 4,

Figure 6 is a sectional view similar to Fig. 4, showing the operation of the cylinder lock of Fig. 4.

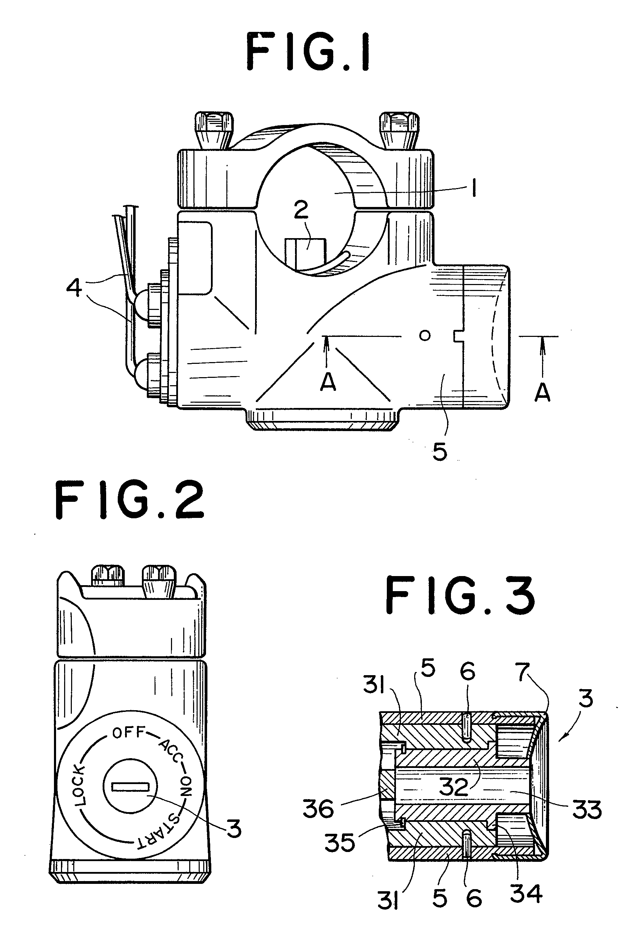

Referring first to Figs 1 to 3, a brief reference will be made to a conventional cylinder lock which is applied, by way of example, to an automobile steering lock combined with an ignition switch. Steering locks are widely used for automobiles because safeguard only by an ignition switch is insufficient. The steering lock assembly shown in Figs 1 to 3 has only one cylinder which serves to fasten both the ignition switch and the steering lock. A hole 1 receives a steering shaft.

A bolt 2 is thrust out by an operation of cylinder lock 3 and inserted into a hole formed in the steering shaft thereby rendering the rotation of the steering shaft unfeasible. At the same time, the operation of the cylinder lock actuates the ignition switch to shut off an electric power supply through wires 4. The cylinder lock 3 has a casing 5, to which an outer cylinder 31 is fastened by fast pins 6. An inner cylinder 32 has a keyhole 33 and is connected with the outer cylinder through tumbler pins so that the inner cylinder 32 is rotatable with respect to the outer cylinder 31 when a correct key is inserted into the keyhole. The inner cylinder 32 further has a flange 34 for preventing an inward movement of the inner cylinder, and a retaining ring 35 for preventing the inner cylinder from being extracted. At the inner most portion of the inner cylinder 32, there is provided an actuating member 36 which is moved by the rotational movement of the inner cylinder 32 and actuates the steering lock and the ignition switch. The outer end of casing 5 is covered by a cap 7.

In this construction, only the ring 35 serves as a prevention against the inner cylinder being extracted, and, therefore, the prevention is not enough. The cap, too, is not strong enough to serve as such a prevention.

Besides, the inner cylinder 32 is made of a relatively soft material such as zinc die-casting alloys. Accordingly, if someone forcibly inserts a screw tap into the keyhole, interlocks it with the inner cylinder, and applies an impact pulling force, one can break the retaining ring 35, then extract the inner cylinder, and open the cylinder lock without a duplicate key. It is unfeasible to increase the strength of the retaining ring because of a restricted narrow space, and such is also the case with other retaining means such as a retaining pin.

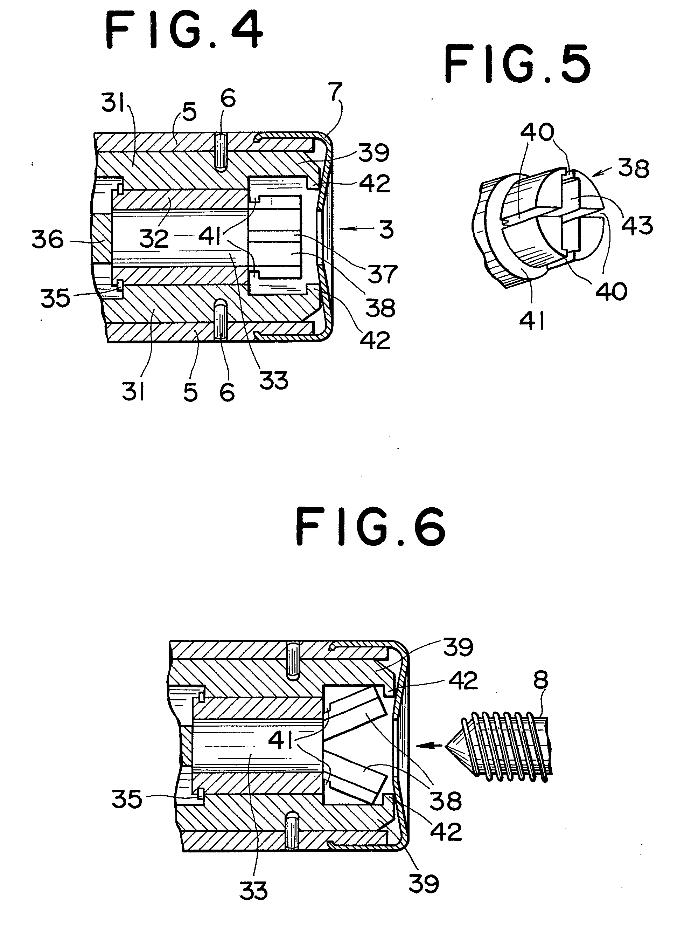

In view of the above description, a reference is now made to Figs 4 to 6, wherein a preferred embodiment of the cylinder lock according to the present invention is shown.

As shown in Fig. 4, there are provided, at the entrance 37 of the keyhole 33, a deformable portion 38 which can be deformed into a radially expanded form when an irrelevant object different from a correct key is forcibly inserted, and, at a corresponding position of the outer cylinder 31, a stop portion 39 which comes into contact with the deformable portion 38 of the radially expanded form when said inner cylinder 32 is pulled outwardly, and prevents the inner cylinder from being extracted.

As shown in Fig. 5, the deformable portion 38 of this embodiment has an insertion hole 43 and is divided into several small sections by a plurality of slits 40, so that the strength of the deformable portion is weakened. The deformable portion 38 is further weakened by a circumferential groove 41 formed at the base of the deformable portion 38. The stop portion 39 extends over the deformable portion 38, and has, at the outmost end, an inward projection 42 having an angled section. The stop portion 39 is normally out of contact with the deformable portion 38.

If a screw tap 8 or other tool is forcibly inserted into the keyhole 33 through the insertion hole 43, the deformable portion 38 is deformed into the radially expanded form, as shown in Fig. 6, by the aid of the slits and notch effect of the groove 41. When the tap is interlocked with the deformable portion 38 or the inner cylinder 32 and a strong pulling force is applied, the front ends of the deformable portion 38 come into collision against the inward projection 42 and forbid the extraction of the inner cylinder 32, even if the retaining ring 35 is broken.

The cylinder lock of the present invention works well in normal use just as a conventional cylinder lock. However, according to the present invention, there is provided, in addition to normal means for retaining the inner cylinder, means for preventing the inner cylinder from being extracted which comprises the deformable portion and the stop portion. Therefore, one must further break the deformable portion in order to break open the lock. Thus, the cylinder lock of the present invention provides an improved safety against theft with a simple construction without affecting the normal function of the cylinder lock.

**Claims**

1. A cylinder lock comprising :

— a casing (5, 31) having a bore,
— a cylinder (32) rotatably received in said bore of said casing and having a keyhole (33),
— a tumbler mechanism connected with both said casing and said cylinder for allowing said cylinder to rotate only when a corresponding correct key is inserted into said keyhole,
— actuating means (36) actuated by the rotational movement of said cylinder for actuating the locking action,
— wherein said cylinder (32) is provided, at the entrance of said keyhole, with a portion (38) which is deformable in response to a force exceeding a predetermined level and exerted by an object other than a correct key inserted into said keyhole, said casing (5, 31) having a stop portion which comes into contact with said deformable portion (38) when deformed into the radially expanded form, characterised in that : the stop portion is formed with a projecting portion (39) of said casing (31), which extends outwardly therefrom and has a bore in which said deformable portion (38) is located, said projecting portion (39) of said casing (31) having a flange (42) extending inwardly therefrom to provide a limited opening having a size which permits the passage therethrough of said deformable portion (38) of said cylinder (32) when said deformable portion is in its normal undeformed condition, said deformable portion (38) having a hole (43) therein for the insertion therethrough of the correct key into said keyhole (33), said deformable portion having in its deformed condition a circumferential contour which, in its entire circumference, is expanded radially beyond the limited opening of said flange (42) and is located behind the flange (42) within the bore of said projecting portion (39) so as to prevent extraction of said cylinder (32) axially from said casing (31).

2. A cylinder lock according to Claim 1, wherein said deformable portion (38) has a plurality of slits (40) disposed radially around said insertion hole (43) and cut axially from an outer end of said deformable portion (38) to some depth so that said deformable portion is divided into several sections radially disposed around said insertion hole (43) and each extending axially.

3. A cylinder lock according to Claim 2, wherein said deformable portion (38) is formed with a circumferential groove (41) formed on the circumference of said deformable portion surrounding said insertion hole (43), said slits (40) extending axially to said groove.

**Ansprüche**

1. Zylinderschloß mit den folgenden Merkmalen :

— ein Gehäuse (5, 31) mit einer Bohrung,
— ein Zylinder (32), der drehbar in der Bohrung des Gehäuses aufgenommen ist und ein Schlüsselloch (33) aufweist,
— ein Zuhaltungsmechanismus, der sowohl mit dem Gehäuse als auch dem Zylinder verbunden ist, um die Drehung des Zylinders nur dann zuzulassen, wenn ein entsprechender, korrekter Schlüssel in das Schlüsselloch eingeführt ist,

— eine Betätigungseinrichtung (36), die durch die Drehbewegung des Zylinders betätigt wird, um die Wirkung des Schlosses auszulösen,

— wobei der Zylinder (32) am Einlaß des Schlüssellochs mit einem Abschnitt (38) versehen ist, der in Abhängigkeit von einer Kraft verformbar ist, die einen bestimmten Wert überschreitet und von einem anderen Gegenstand als einem korrekten Schlüssel ausgeübt wird, der in das Schlüsselloch eingeführt wird, und wobei das Gehäuse (5, 31) einen Anschlagabschnitt aufweist, der in Berührung mit dem verformbaren Abschnitt (38) gelangt, wenn dieser in einer radial expandierten Form verformt wird, dadurch gekennzeichnet, daß der Anschlagabschnitt mit einem vorspringenden Abschnitt (39) des Gehäuses (31) ausgebildet ist, der sich hiervon auswärts erstreckt und eine Bohrung aufweist, in welcher der verformbare Abschnitt (38) angeordnet ist, daß der vorspringende Abschnitt (39) des Gehäuses (31) einen Flansch (42) aufweist, der sich hiervon einwärts erstreckt, um eine begrenzte Öffnung zu bilden, die eine Größe aufweist, welche es gestattet, daß der verformbare Abschnitt (38) des Zylinders (32) hindurchtritt, wenn der verformbare Abschnitt sich in seinem normalen, unverformten Zustand befindet, daß im verformbaren Abschnitt (38) ein Loch (43) für die Einführung des korrekten Schlüssels hierdurch in das Schlüsselloch (33) vorliegt, und daß der verformbare Abschnitt in seinem verformten Zustand eine Umfangskontur aufweist, welche in ihrem gesamten Umfang radial bis über die begrenzte Öffnung des Flansches (42) hinaus aufgeweitet ist und hinter dem Flansch (42) innerhalb der Bohrung des vorspringenden Abschnitts (39) angeordnet ist, um das Ausziehen des Zylinders (32) in axialer Richtung aus dem Gehäuse (31) zu verhindern.

2. Zylinderschloß nach Anspruch 1, dadurch gekennzeichnet, daß der verformbare Abschnitt (38) mehrere Schlitze (40) aufweist, die radial rund um das Einführungsloch (43) angeordnet und axial vom äußeren Ende des verformbaren Abschnitts (38) ausgehend bis zu einiger Tiefe derart eingeschnitten sind, daß der verformbare Abschnitt in mehrere Sektionen unterteilt ist, die radial rund um das Einführungsloch (43) angeordnet sind, und sich jeweils axial erstrecken.

3. Zylinderschloß nach Anspruch 2, dadurch gekennzeichnet, daß der verformbare Abschnitt (38) mit einer Umfangsnut (41) ausgebildet ist, die am Umfang des verformbaren Abschnitts ausgebildet ist, der das Einführungsloch (43) umgibt, wobei sich die Schlitze (40) axial zur Nut erstrecken.

## Revendications

1. Serrure à cylindre comprenant :
— un boîtier (5, 31) ayant un perçage,
— un cylindre (32) reçu rotatif dans ledit perçage dudit boîtier et ayant un trou de serrure (33),
— un mécanisme à gorge connecté audit boîtier et audit cylindre pour permettre audit cylindre de tourner uniquement quand une clé correcte correspondante est insérée dans ledit trou de serrure,
— un moyen de mise en action (36) actionné par le mouvement de rotation dudit cylindre pour actionner l'action de fermeture à clé,
— où ledit cylindre (32) est pourvu, à l'entrée dudit trou de serrure, d'une partie (38) qui est déformable en réponse à une force dépassant un niveau prédéterminé et exercée par un objet autre qu'une clé correcte insérée dans ledit trou de serrure, ledit boîtier (5, 31) ayant une partie d'arrêt qui vient en contact avec ladite partie déformable (38) quand elle est déformée à sa forme radialement dilatée, caractérisée en ce que : la partie d'arrêt est formée par une partie en protubérance (39) dudit boîtier (31), qui s'en étend vers l'extérieur et qui a un perçage où est placée ladite partie déformable (38), ladite partie en protubérance (39) dudit boîtier ayant un rebord (42) s'en étendant vers l'intérieur pour former une ouverture limitée ayant une dimension qui permet le passage de ladite partie déformable (38) dudit cylindre (32) quand ladite partie déformable est à sa condition normale non déformée, ladite partie déformable (38) étant traversée d'un trou (43) pour l'insertion de la clé correcte dans ledit trou de serrure (33), ladite partie déformable ayant, à sa condition déformée, un contour circonférentiel qui, sur toute sa circonférence, est radialement dilaté au-delà de l'ouverture limitée dudit rebord (42) et se trouve derrière le rebord (42) dans le perçage de ladite partie en protubérance (39) afin d'empêcher l'extraction dudit cylindre (32), axialement, hors dudit boîtier.

2. Serrure à cylindre selon la revendication 1, où ladite partie déformable (38) a un certain nombre de fentes (40) disposées radialement autour dudit trou d'insertion (43) et découpées axialement à partir d'une extrémité externe de ladite partie déformable (38), à une certaine profondeur de façon que ladite partie déformable soit divisée en plusieurs sections radialement disposées autour dudit trou d'insertion (43), chacune s'étendant axialement.

3. Serrure à cylindre selon la revendication 2, où ladite partie déformable (38) présente une gorge circonférentielle (41) qui est formée sur la circonférence de ladite partie déformable entourant ledit trou d'insertion (43), lesdites fentes (40) s'étendant axialement jusqu'à ladite gorge.

# FIG.1

# FIG.2

# FIG.3

# FIG.4

# FIG.5

# FIG.6